# EUROPÄISCHE PATENTANMELDUNG

(11) **EP 1 653 079 A2**
(43) Veröffentlichungstag der Anmeldung: **03.05.2006**
(21) Anmeldenummer: 05022832.9
(22) Anmeldetag: 20.10.2005
(51) Int. Cl.: F03D 11/00

(54) **Windenergieanlage**

(30) Priorität: 29.10.2004 DE 102004052598
(71) Anmelder: AB SKF, S-415 50 Göteborg (SE)
(72) Erfinder: Kirsch, Reinhard, 91315 Höchstadt (DE); Derrer, Siegfried, 91315 Höchstadt (DE)
(74) Vertreter: Kohl, Thomas

(57) **Zusammenfassung**

Eine Windenergieanlage umfasst einen Außenring (20), einen Innenring (10) und für ein Verdrehen der Ringe gegeneinander zwischen einem Innenmantel des Außenrings (22) und einem Außenmantel des Innenrings (12) angeordnete Wälzkörper (30), wobei einer der Ringe an besagtem Mantel wenigstens entlang eines Teils des Umfangs Sensorhilfsmittel (42) umfasst, die zusammen mit im anderen Ring vorgesehenen Sensorhauptmitteln (44) derart gestaltet sind, dass eine Verdrehposition der beiden Ringe zueinander erfassbar ist.

## Beschreibung

Die Erfindung betrifft eine Windenergieanlage.

Es ist hinlänglich bekannt, dass bei einer überwiegenden Anzahl der Windenergieanlagen Rotorblätter der Windenergieanlage, in Abhängigkeit von der jeweiligen Windgeschwindigkeit, in eine bestimmte Stellung gebracht werden. Dazu müssen die Rotorblätter entsprechend verstellbar gelagert sein. Weiterhin ist es hinlänglich bekannt, dass bei einer Vielzahl von Windenergieanlagen mit einem drehbar gelagerten Turmhaus das Turmhaus eine Bremse benötigt, damit das Turmhaus in Windrichtung gehalten werden kann.

Eine Aufgabe der Erfindung ist es, eine verbesserte Windenergieanlage zu schaffen, bei der insbesondere im Bereich einer Blattlagerung und/oder einer Turmhauslagerung eine erhöhte Kompaktheit erzielbar ist.

Die Aufgabe wird durch den Gegenstand des Anspruchs 1 gelöst. Vorteilhafte Ausgestaltungen sind in den Unteransprüchen beschrieben.

Gemäß Anspruch 1 umfasst eine Windenergieanlage, insbesondere deren Turmhauslager oder Blattlager, einen Außenring, einen Innenring und für ein Verdrehen der Ringe gegeneinander zwischen einem Innenmantel des Außenrings und einem Außenmantel des Innenrings angeordnete Wälzkörper, wobei einer der Ringe an besagtem Mantel wenigstens entlang eines Teils des Umfangs Sensorhilfsmittel umfasst, die zusammen mit im anderen Ring vorgesehenen Sensorhauptmitteln derart gestaltet sind, dass eine Verdrehposition der beiden Ringe zueinander erfassbar ist.

Dadurch, dass das Sensorsystem sozusagen integraler Bestandteil des Innen- und Außenrings der Lageranordnung ist, entsteht kein zusätzlicher Platzbedarf für ein separat ausgebildetes Sensorsystem. Dabei ist das Sensorsystem mit Vorteil ohne eine Änderung von Außenabmessungen bisher eingesetzter Innen- und Außenringe integrierbar. Durch das Integrieren wird dabei nicht nur mit Vorteil die Kompaktheit erhöht, sondern gleichzeitig wird aufgrund der verringerten Anzahl von Einzelbauelementen die Kostenposition entsprechend verbessert. Weiterhin ist damit mit Vorteil auch eine weitergehende, fabrikmäßige Vormontage möglich.

In einer vorteilhaften Ausgestaltung sind die Sensorhilfsmittel und die Sensorhauptmitteln zueinander berührungsloses angeordnet. Dadurch entsteht mit Vorteil an den Sensormitteln keinerlei Verschleiß. Weiterhin funktioniert dadurch das Sensorsystem auch bei Vorhandensein von Schmiermitteln, beispielsweise Fette und/oder Öle, zwischen den Ringen.

In einer weiteren vorteilhaften Ausgestaltung umfasst einer der Ringe na besagtem Mantel einen ringartig umlaufenden Bremsflächenbereich und der andere der Ringe umfasst betätigbare Bremsmittel, von denen wenigstens ein Teil gegen den Bremsflächenbereich pressbar ist. Damit ist zusätzlich zu dem Sensorsystem ein Bremssystem in die Ringe integrierbar, was insbesondere bei einem Turmhauslager von besonderem Vorteil ist, da separate Bauelemente für das Sensor- und Bremssystem vermieden werden. Gegenüber konventionellen Ringen, die frei von Integrationsbauelementen sind, sind für die Ringe mit integriertem Sensor- und Bremssystem lediglich geringfügig axial erweiterte Abmessungen vorzusehen. Ansonsten gelten die vorausgehend für die Integration des Sensorsystems beschriebenen Vorteile für die Integration des Bremssystems in entsprechender Weise.

Weitere Vorteile, Merkmale und Einzelheiten der Erfindung ergeben sich aus den nachfolgend beschriebenen Ausführungsbeispielen der Erfindung anhand der Figuren. Dabei zeigen:
- Figur 1: einen ausschnittsweisen Querschnitt durch eine Blattlagerung einer Windenergieanlage und
- Figur 2: einen ausschnittsweisen Querschnitt durch eine Turmhauslagerung einer Windenergieanlage.

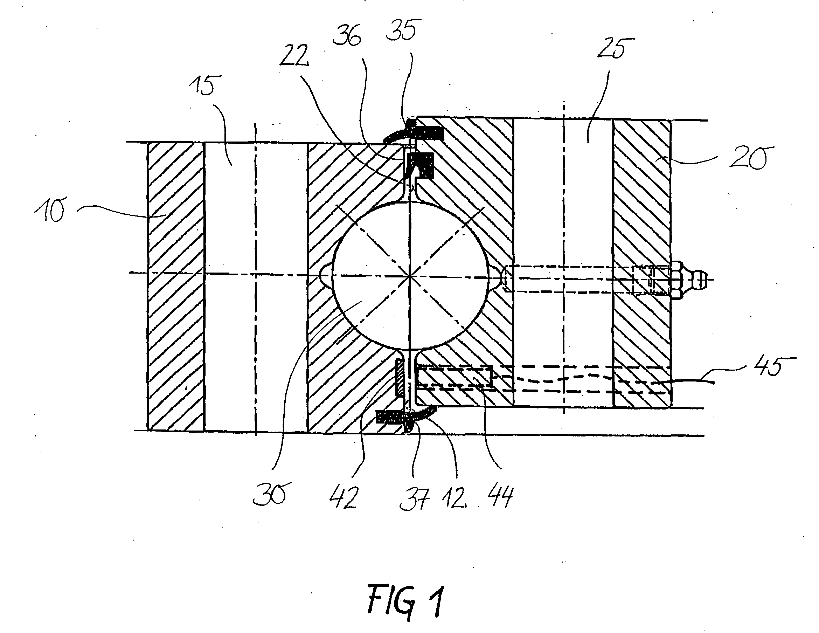

Figur 1 zeigt als ein Ausführungsbeispiel der Erfindung einen Querschnitt durch eine Wälzlageranordnung zum Lagern eines Rotorblattes einer Windenergieanlage, wobei als ein Ausschnitt der Schnitt an einer Umfangsstelle der Wälzlageranordnung geführt ist. Die Wälzlageranordnung umfasst dabei einen ersten und einen zweiten Wälzlagerring 10 und 20, die im Wesentlichen konzentrisch zueinander angeordnet sind und zwischen deren einander zugewandten Mänteln 12 und 22 für ein Schwenken der beiden Wälzlagerringe 10 und 20 gegeneinander als Kugeln ausgebildete Wälzkörper 30 angeordnet sind.

Weiterhin umfasst die Wälzlageranordnung zwischen den beiden Wälzlagerringen 10 und 20 wirkende Dichtungen 35, 36 und 37, mit denen unter anderem ein Eindringen von Schmutz und Feuchtigkeit von außen her in den abgedichteten Raum hinein verhindert werden soll. Die Wälzlagerringe 10 und 20 sind dabei mit mehreren, in Umfangsrichtung verteilt angeordneten, axialen Bohrungen 15 und 25 für ein Befestigen der Wälzlagerringe 10 und 20 an den entsprechenden Bauelementen der übrigen Windenergieanlage ausgebildet.

Für ein Erfassen einer Verdrehposition der beiden Wälzlagerringe 10 und 20 zueinander, umfassend eine Null-Stellungserfassung, umfasst die Wälzlageranordnung als integralen Bestandteil ein entsprechend hergerichtetes Sensorsystem. Dabei umfasst das Sensorsystem Sensorhilfsmittel 42, die als ein biegeelastisches, magnetisierbares Band mit Wechselpolen ausgebildet sind, das wenigstens in einem 90°-Segment in einer entsprechenden Nut des Mantels 12 des ersten Wälzlagerrings 10 angeordnet ist. Dabei ist für den Einsatz bei besagtem Blattlager der 90°-Bereich ausreichend, da in der Regel die Blätter nicht über einen Bereich von 0 bis 90° hinausgehend verschwenkbar sind.

An wenigstens einer, besagtem 90°-Bereich gegenüberliegenden Stelle am Mantel 22 des zweiten Wälzlagerrings 20, die bei einem bestimmungsgemäßen Einbau und Betrieb der Wälzlagerringe 10 und 20 unabhängig von einer Verschwenkposition nicht über besagten 90°-Bereich hinausgeht, sind in einer entsprechenden, radial geführten Bohrung im zweiten Wälzlagerring 20 Sensorhauptmittel 44 zum Erfassen der Verdrehposition angeordnet. Dabei ist die Bohrung für die Sensorhauptmittel 44 vorzugsweise zwischen zwei Bohrungen 25 des zweiten Wälzlagerrings 20 angeordnet.

Die Sensorhilfsmittel 42 sind dabei berührungslos zu den Sensorhauptmitteln 44 angeordnet und derart aufeinander abgestimmt, dass eine Verdrehposition entsprechend erfassbar ist. Dabei wird das die jeweilige Verdrehposition charakterisierende Ausgangssignal der Sensorhauptmittel 44 mittels einer entsprechenden Anschlussleitung 45 an eine nicht dargestellte Auswerteeinheit weitergeleitet, die wiederum mit einer entsprechenden Steuer- bzw. Regeleinheit für die Blattverstellung in Verbindung steht oder integraler Bestandteil derer ist. Näheres hinsichtlich einer Ausbildung des Sensorsystems kann beispielsweise der DE 697 24 343 T1 entnommen werden.

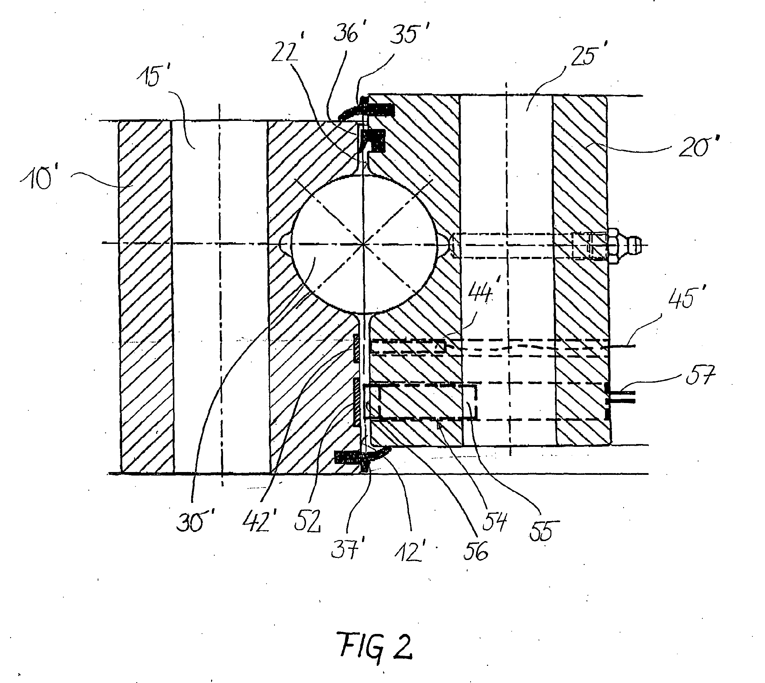

Die Figur 2 zeigt als ein weiteres Ausführungsbeispiel der Erfindung einen Querschnitt durch eine Wälzlageranordnung zum Lagern eines Turmhauses einer Windenergieanlage, wobei als ein Ausschnitt der Schnitt an einer Umfangsstelle der Wälzlageranordnung geführt ist. Dabei sind bei der Figur 2 in Bezug zur Figur 1 gleichartige Bauelemente mit den gleichen Bezugszeichennummern wie bei der Figur 1, ergänzt um einen Hochstrich bezeichnet, wobei zu deren Beschreibung entsprechend auf das zur Figur 1 Beschriebene verwiesen wird.

Gegenüber der Wälzlageranordnung der Figur 1 erstrecken sich bei der Figur 2 die Sensorhilfsmittel 42' nicht nur in einem 90°-Segment, sondern sind ringartig umlaufend ausgebildet, da es bekanntlich beim Turmhauslager keine Einschränkung des Verschwenkbereichs wie bei der Blattlagerung gibt. Weiterhin umfasst die Wälzlageranordnung der Figur 2 zusätzlich zu der der Figur 1 als integrales Bauelement ein Bremssystem.

Dabei umfasst das Bremssystem ringartig umlaufende Bremsflächenmittel 52, die in einer entsprechenden Nut des Mantels 12' des ersten Wälzlagerrings 10' angeordnet sind. An wenigstens einer den Bremsflächenmitteln 52 gegenüberliegenden Stelle am Mantel 22' des zweiten Wälzlagerrings 20' sind in einer entsprechenden, radial geführten Bohrung im zweiten Wälzlagerring 20' betätigbare Bremsmittel 54 angeordnet. Dabei ist die Bohrung für die Bremsmittel 54 vorzugsweise zwischen zwei Bohrungen 25' des zweiten Wälzlagerrings 20' angeordnet. Die betätigbaren Bremsmittel 54 umfassen dabei einen innerhalb besagter Bohrung hydraulisch bewegbaren Kolben 55, wobei der Kolben 55 an seiner den Bremsflächenmitteln 52 zugewandten Stirnseite mit einem austauschbaren Bremsbacken 56 versehen ist. Dadurch, dass der Bremsbacken 56 austauschbar, d.h. insbesondere lösbar mit dem Kolben 55 verbunden ist, kann er als einziges Verschleißteil der Wälzlageranordnung beispielsweise im Rahmen der Routineinspektionen bei Bedarf einfach erneuert werden. Auf der den Bremsflächenmitteln 52 abgewandten Seite ist besagte Bohrung mittels eines Hydraulikanschlusses 57 verschlossen über den für ein entsprechendes Bewegen des Kolbens 55 zwischen dem Hydraulikanschluss 57 und dem Kolben 55 Hydraulikflüssigkeit in besagte Bohrung einpressbar ist bzw. abgezogen werden kann.

In anderen Ausführungsformen ist der Kolben elektromechanisch betätigbar und/oder es sind wenigstens zwei bezüglich eines Durchmessers des Wälzlagerrings einander gegenüberliegende Kolben vorgesehen, wodurch sich mit Vorteil die durch die betätigten Bremsmittel auf die Wälzlagerringe ausgeübten Kräfte vektoriell aufheben.

### Bezugszeichenliste

- 10, 10': erster Wälzlagerring
- 12, 12': Mantel des ersten Wälzlagerrings
- 15, 15': Bohrung im ersten Wälzlagerring

- 20, 20': zweiter Wälzlagerring
- 22, 22': Mantel des zweiten Wälzlagerrings
- 25, 25': Bohrung im zweiten Wälzlagerring

- 30, 30': Wälzkörper
- 35, 36, 37, 35', 36', 37': Dichtung

- 42, 42': Sensorhilfsmittel
- 44, 44': Sensorhauptmittel
- 45, 45': Anschlussleitung

- 52: Bremsflächenmittel
- 54: betätigbare Bremsmittel
- 55: Kolben
- 56: Bremsbacken
- 57: Hydraulikanschluss

## Patentansprüche

1. Windenergieanlage, umfassend einen Außenring, einen Innenring und für ein Verdrehen der Ringe gegeneinander zwischen einem Innenmantel des Außenrings und einem Außenmantel des Innenrings angeordnete Wälzkörper, wobei einer der Ringe an besagtem Mantel wenigstens entlang eines Teils des Umfangs Sensorhilfsmittel umfasst, die zusammen mit im anderen Ring vorgesehenen Sensorhauptmitteln derart gestaltet sind, dass eine Verdrehposition der beiden Ringe zueinander erfassbar ist.

2. Windenergieanlage nach Anspruch 1, wobei die Sensorhilfsmittel und die Sensorhauptmittel zueinander berührungslos angeordnet sind.

3. Windenergieanlage nach einem der Ansprüche 1 oder 2, wobei die Sensorhilfsmittel ein magnetisierbares Band mit Wechselpolen umfassen.

4. Windenergieanlage nach einem der Ansprüche 1 bis 3, wobei die Sensorhilfsmittel in einer entsprechend ausgebildeten Nut des Rings angeordnet sind.

5. Windenergieanlage nach einem der Ansprüche 1 bis 4, wobei die Ringe, Wälzkörper, Sensorhilfsmittel und Sensorhauptmittel einer Blattlagerung der Windenergieanlage zugehören.

6. Windenergieanlage nach einem der Ansprüche 1 bis 5, wobei einer der Ringe an besagtem Mantel einen ringartig umlaufenden Bremsflächenbereich und der andere der Ringe betätigbare Bremsmittel umfasst, von denen wenigstens ein Teil gegen den Bremsflächenbereich pressbar ist.

7. Windenergieanlage nach einem der Ansprüche 1 bis 6, wobei die Sensorhauptmittel und/oder die Bremsmittel in einer Höhlung, insbesondere einer im Wesentlichen radial verlaufenden Bohrung, des Rings angeordnet sind.

8. Windenergieanlage nach einem der Ansprüche 6 oder 7, wobei die Bremsmittel über eine entsprechende Zuleitung steuerbar ausgebildet sind.

9. Windenergieanlage nach einem der Ansprüche 6 bis 8, wobei die Bremsmittel hydraulisch und/oder elektromechanisch betätigbar ausgebildet sind.

10. Windenergieanlage nach einem der Ansprüche 6 bis 9, wobei die Bremsmittel an wenigstens zwei, sich bezüglich eines Ringdurchmessers einander gegenüberliegenden Stellen angeordnet sind.

11. Windenergieanlage nach einem der Ansprüche 6 bis 10, wobei die Bremsmittel einen entlang einer Achse bewegbaren Kolben umfassen.

12. Windenergieanlage nach einem der Ansprüche 6 bis 11, wobei die Bremsmittel den Bremsflächenbereich unmittelbar gegenüberliegend einen Bremsbacken umfassen.

13. Windenergieanlage nach Anspruch 12, wobei der Bremsbacken lösbar mit den übrigen Bremsmitteln verbunden ist.

14. Windenergieanlage nach einem der Ansprüche 6 bis 13, wobei die Ringe, Wälzkörper, Sensorhilfsmittel, Sensorhauptmittel und Bremsmittel einer Turmhauslagerung der Windenergieanlage zugehören.
